# EUROPEAN PATENT SPECIFICATION

(11) **EP 2 536 114 B1**
(45) Date of publication and mention of the grant of the patent: **18.01.2017**
(21) Application number: 10845549.4
(22) Date of filing: 20.08.2010
(51) Int. Cl.: H04M 3/42, H04M 3/46, H04M 3/58, H04M 3/493

(54) **METHOD AND APPARATUS FOR IMPLEMENTING CALL TRANSFER BY VOICE EXTENSIBLE MARKUP LANGUAGE**
VERFAHREN UND VORRICHTUNG ZUR IMPLEMENTIERUNG EINER ANRUFDURCHSTELLUNG DURCH VOICE EXTENSIBLE MARKUP LANGUAGE
PROCÉDÉ ET APPAREIL PERMETTANT DE METTRE EN OEUVRE UN TRANSFERT D'APPEL AU MOYEN DU LANGAGE DE BALISAGE EXTENSIBLE VOCAL

(30) Priority: 09.02.2010 CN 201010125721
(43) Date of publication of application: 19.12.2012
(73) Proprietor: ZTE Corporation, Shenzhen, Guangdong 518057 (CN)
(72) Inventor: YU, Lingling, Shenzhen Guangdong 518057 (CN)
(74) Representative: Hoyle, Benjamin James
(86) International application number: PCT/CN2010/076180
(87) International publication number: WO 2011/097879

(56) References cited:
- WO-A2-2007/140369
- CN-A- 1 558 655
- CN-A- 101 547 263
- US-A1- 2009 003 380
- US-A1- 2009 097 631
- "Voice Extensible Markup Languge (VoiceXML) Version 2.0", INTERNET CITATION, 20 February 2003 (2003-02-20), XP002248286, Retrieved from the Internet: URL:http://www.w3.org/TR/voicexml20 [retrieved on 2003-07-18]

## Description

### Technical field of the invention

The invention relates to the field of communications, in particular to a method and an apparatus for implementing call transfer by voice extensible markup language (VXML or Voice XML).

### Background of the invention

VXML is a kind of script language based on extensible markup language (XML), and it supports voice browsing.

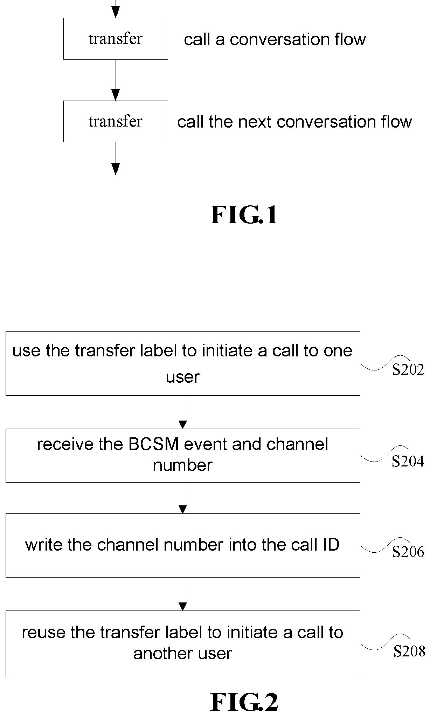

VXML defines tags (hereinafter also referred to as labels) related to voice. Labels defined in the VXML2.0 Standard are synchronous labels, only when one label is accomplished, the next label can be executed. Fig. 1 shows a schematic diagram of synchronous transfer according to relevant art. As shown in Fig. 1, the transfer label calls and transfers only one user each time, that is, it may call and transfer another user only after the current transfer ends. Fig. 2 shows a flowchart of a synchronous transfer method according to relevant art, as shown in Fig. 2, the synchronous transfer in relevant art comprises the following steps.

Step S202: Using the transfer label to initiate a call to one user.

Step S204: Receiving the BCSM event (for example, response event) corresponding to the call and the channel number corresponding to the call.

Step S206: Writing the channel number into the call ID.

Step S208: Reusing the transfer label to initiate a call to another user.

However, if it is required to achieve the effect that telephones ring simultaneously, it is necessary to call a plurality of users at the same time. In the synchronous transfer method according to relevant art as shown in Fig. 1 and Fig. 2, as the transfer label calls and transfers only one user each time, and it may call and transfer another user only after the current transfer ends, it is unable to call a plurality of users at the same time, so that it is unable to achieve the effect that telephones ring simultaneously. That is, calling a plurality of users at the same time cannot be achieved, once any one of the plurality of called users has been connected, calls to other users are stopped.

### Summary of the invention

One aspect of the invention is to provide a solution for implementing call transfer by VXML, to solve at least one of the above problems.

It is the object of the present invention to provide an improved method for implementing call transfer by VXML, as well as a corresponding apparatus. This object is solved by the subject matter of the independent claims. Preferred embodiments are defined by the dependent claims.

In present invention, the way of using the outbound label to call the plurality of called users one by one and using the waiting label to process the asynchronous events which occur during the calls to the plurality of called users is adopted, so that the problem that it is unable to achieve the effect that telephones ring simultaneously by using VXML labels in the related technology is solved, further the effect that telephones ring simultaneously by using VXML labels can be achieved.

### Brief description of the drawings

The drawings, provided for further understanding of the present invention and forming a part of the specification, are used to explain the present invention together with embodiments of the present invention rather than to limit the present invention, wherein
Fig. 1 shows a schematic diagram of synchronous transfer according to relevant art;
Fig. 2 shows a flowchart of a synchronous transfer method according to relevant art;
Fig. 3 shows a flowchart of a method for implementing call transfer by VXML according to the embodiments of the invention;
Fig. 4 shows a flowchart of a method for calling a plurality of called users according to the embodiments of the invention;
Fig. 5 shows a flowchart of the method for implementing call transfer by VXML according to the preferred embodiment 1 of the invention;
Fig. 6 shows a flowchart of the method for implementing call transfer by VXML according to the preferred embodiment 2 of the invention;
Fig. 7 shows a structure diagram of an apparatus for implementing call transfer by VXML according to the embodiments of the invention; and
Fig. 8 shows the specific structure diagram of the apparatus for implementing call transfer by VXML according to the embodiments of the invention.

### Detailed description of the invention

The invention will be described in details below with reference to drawings in conjunction with embodiments. It should be noted that, if not conflict, the embodiments in the application and the features in the embodiments may be combined together.

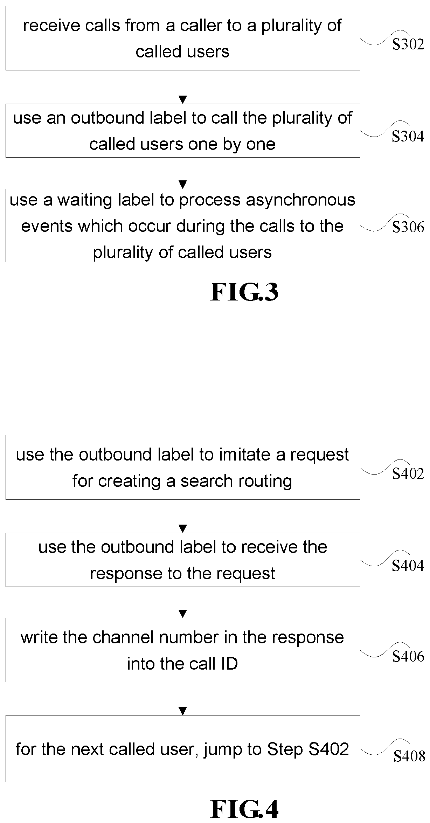

According to an embodiment of the invention, a method for implementing call transfer by VXML is provided. Fig. 3 shows a flowchart of the method for implementing call transfer by VXML according to the embodiments of the invention, as shown in Fig. 3, the method comprises the following steps:
Step S302: Receiving calls from a caller to a plurality of called users.
Step S304: Using an outbound label to call the plurality of called users one by one, wherein, calling the next called user immediately once a routing response from the called user for the current call is received.
Step S306: Using a waiting label to process asynchronous events which occur during the calls to the plurality of called users.

In above method, the way of using the outbound label to call the plurality of called users one by one and using the waiting label to process the asynchronous events which occur during the calls to the plurality of called users is adopted, as a result, before the called users feed back asynchronous events, the outbound label can be used to call a plurality of called users one by one, so that the effect that telephones ring simultaneously can be achieved.

Preferably, the step of using the waiting label to process asynchronous events comprises: using the waiting label to obtain a response event of a called user, wherein the response event is responded for the first time, that is, the asynchronous event is the response event that is responded for the first time; and then jumping to use a call connecting label to process.

In the embodiment, the waiting label is used to jump the asynchronous event that is responded for the first time to use the call connection label to process, so as to achieve the processing of such asynchronous event that is responded for the first time, so that the flow of using the outbound label to call a plurality of called users one by one will not be influenced.

Preferably, the step of jumping to use the call connecting label to process comprises: using the call connecting label to connect the caller with the called user corresponding to the response event; and then jumping to use the waiting label to process the asynchronous event.

In the embodiment, the call connecting label is used to achieve connection between the caller and the called user, so that the flow of using the outbound label to call a plurality of called users one by one will not be influenced.

Preferably, the step of using the waiting label to process the asynchronous event comprises: using the waiting label to obtain the response event of a called user, wherein the response event is not responded for the first time, that is, the asynchronous event is a response event that is not responded for the first time; then setting the ID of the call corresponding to the response event invalid; and jumping to use a call release label to process.

In the embodiment, the waiting label is used to jump the response event that is not responded for the first time to use the call release label to process, so as to achieve the processing of such asynchronous event that is not responded for the first time, so that the flow of using the outbound label to call a plurality of called users one by one will not be influenced.

Preferably, the step of jumping to use the call release label to process comprises: using the call release label to release the call with invalid ID, wherein the call release label carries the reason for releasing the call; and then jumping to use the waiting label to process the asynchronous event.

In the embodiment, the call release label is used to achieve the call release of the called user that is not responded for the first time, so that the flow of using the outbound label to call a plurality of called users one by one will not be influenced.

Preferably, the step of using the waiting label to process the asynchronous event comprises: using the waiting label to obtain an on-hook event of one called user, that is, the asynchronous event is the on-hook event of one called user; releasing the call corresponding to the on-hook event.

In the embodiment, the waiting label is used to release the call between the caller and the called user, so that the flow of using the outbound label to call a plurality of called users one by one will not be influenced.

Preferably, the step of using the waiting label to process the asynchronous event comprises: using the waiting label to obtain a call failure event of one called user; setting the ID of the call corresponding to the call failure event invalid; adding the number of errors by 1; judging whether the number of errors is equal to the number of the plurality of called users, if so, releasing calls corresponding to the plurality of called users.

In the embodiment, the waiting label is used to release calls of all called users when calls to the plurality of called users are failed, so that the flow of using the outbound label to call a plurality of called users one by one will not be influenced.

Preferably, the step of using the waiting label to process the asynchronous event further comprises: if the number of errors is not equal to the number of the plurality of called users, then jumping to use the waiting label to process the asynchronous event.

In the embodiment, when not all calls to the called users are failed, the waiting label is used to jump to use the waiting label to process the asynchronous event, so that the flow of using the outbound label to call a plurality of called users one by one will not be influenced.

Preferably, in Step S304, the step of using an outbound label to call the plurality of called users one by one, wherein, calling the next called user immediately once a routing response from the called user for the current call is received, may adopt the flow as shown in Fig. 4, comprising the following steps.

Step S402: For the called user corresponding to the current call, using the outbound label to imitate a request for establishing a search routing.

Step S404: Using the outbound label to receive the response to the request.

Step S406: Writing a channel number carried in the response into the call ID.

Step S408: For the next called user, jumping to the step of using the outbound label to initiate a request for establishing a search routing (that is, Step S402).

In the embodiment, for a call, the outbound label is used to initiate the request for establishing the search routing, the channel number is obtained and written into the call ID, and for the next call, the above process is repeated, so that concurrent calls to a plurality of called users can be achieved.

Preferably, the outbound label contains: caller parameters, called user parameters, a call response timeout parameter and a parameter for obtaining the call ID; the waiting label contains: output parameters that can be used for obtaining the asynchronous events which occur during the calls to a plurality of called users.

In the embodiment, the outbound label and the waiting label are defined, so that the result of the outbound label is used for calling according to parameters, and the waiting label can be used for obtaining the asynchronous events which occur during the calls to a plurality of called users are achieved.

In specific implementation process, the outbound label, the waiting label, the call connecting label and the call release label are all based on the application of intelligent networks, a series of object labels are extended in VXML. Above labels are object labels extended through self-defined classid. To be convenient to describe, labels among which the next label can be executed by not needing to wait the returning of the execution result or the specified action are called synchronous labels, correspondingly, labels among which the next label can be called only when the flow of the last label ends are called synchronous labels. According to the processing of the outbound label in the embodiment of the invention, it can been seen that, before the called user feeds back the asynchronous event, the outbound label can be used to call a plurality of called users one by one, therefore the outbound label is an asynchronous label, it also can be called as asynchronous calling label. The waiting label, the call connecting label and the call release label are all synchronous labels.

In specific implementation process, the call connecting label carries parameters of the source call ID and destination call ID. The call release label carries ID of the call to be released.

The following preferred embodiments integrate the technical solution of above preferred embodiments and will be described in details below with reference to drawings.

### Preferred embodiment 1

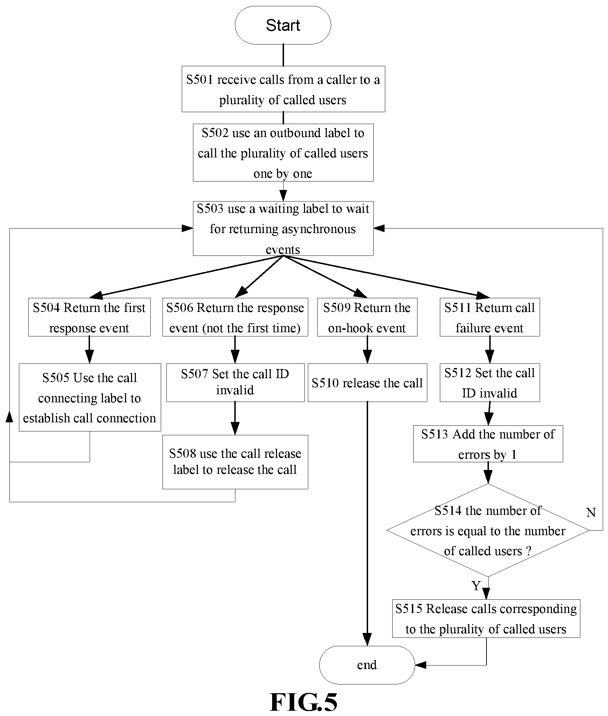

Through the extended VXML label in the embodiment of the invention can control the flow of call transfer, so as to achieve the effect that telephones ring simultaneously. Fig. 5 shows a flowchart of the method for implementing call transfer by VXML according to the preferred embodiment 1 of the invention, as shown in Fig. 5, the method comprises.

Step S501: Receiving calls from a caller to a plurality of called users.

Step S502: Using an outbound label to call the plurality of called users one by one, wherein, calling the next called user immediately once a routing response from the called user for the current call is received.

Step S503: Using a waiting label to wait asynchronous events which occur during the calls to the plurality of called users; the waiting label processes after receiving expected events, otherwise, the <goto> label is used to jump to the waiting label itself, a VXML analyzer executes the label repeatedly until the expect events arrive, these expect events comprise: user off-hook (that is, response event), user on-hook, user attend conference, user exit conference, timeout and abnormality and so on.

Step S504: Using the waiting label to obtain the asynchronous event, wherein the asynchronous event is a response event that is responded for the first time.

Step S505: Using the call connecting label to connect the caller with the called user corresponding to the response event; and then jumping to Step S503.

Step S506: The synchronous event obtained by using the waiting label is a response event of one called user and the response event is not responded for the first time.

Step S507: Setting the ID of the call corresponding to the response event invalid.

Step S508: Using the call release label to release the call with invalid ID, the call release label carries the reason for releasing the call; and then jumping to Step S503.

Step S509: Using the waiting label to obtain the on-hook event of one called user.

Step S510: Releasing the call corresponding to the on-hook event, and ending the flow.

Step S511: The synchronous event obtained by using the waiting label is a call failure event of one called user.

Step S512: Setting the ID of the call corresponding to the call failure event invalid.

Step S513: Adding the number of errors by 1.

Step S514: Judging whether the number of errors is equal to the number of the plurality of called users, if so, executing Step S515, otherwise, jumping to Step S503.

Step S515: Releasing calls corresponding to the plurality of called users, and ending the flow.

In the above method, the outbound label is used to call a plurality of called users, and the waiting label is used to wait and process the returned events, so that the effect that telephones ring simultaneously is achieved.

### Preferred embodiment 2

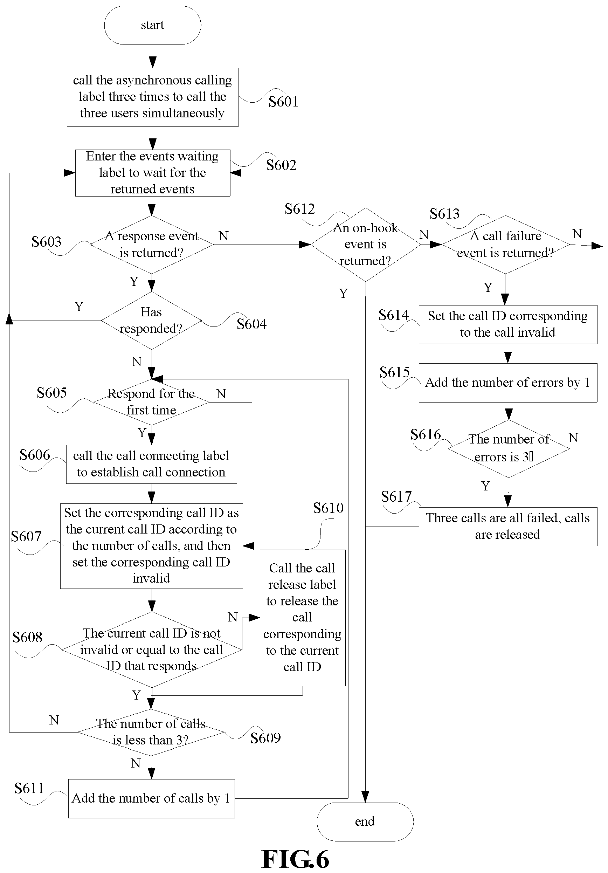

Calling three users simultaneously will be taken as an example below to specifically describe the method for achieving the effect that telephones ring simultaneously through the combinations of the VXML labels extended in the embodiment of the invention, Fig. 6 shows a flowchart of the method for implementing call transfer by VXML according to the preferred embodiment 2 of the invention, as shown in Fig. 6, the method comprises the following steps:
Step S601: Dialing the access codes by users to trigger the VXML script, calling the asynchronous outbound label three times by the script to call the three users.
Step S602: Jumping to the waiting label to wait for an event returned.
Step S603: In the waiting label, if a response event is returned, executing Step S604, otherwise, executing Step S611.
Step S604: Judging whether the called user corresponding to the response event has responded, if so, executing Step S605, otherwise, returning to Step S602.
Step S605: Judging whether the response event is the off-hook event of one of the users obtained for the first time, that is to say, judging whether the response event is responded for the first time, if so, executing Step S606, otherwise, jumping to Step S607.
Step S606: Calling the call connecting label to connect the called user corresponding to the response event with the caller.
Step S607: Setting the corresponding call ID as the current call ID according to the number of calls, and then setting the corresponding call ID invalid.
Step S608: Judging whether the following conditions are met: condition 1, the current call ID is invalid; condition 2, the current call ID is not equal to the call ID that responds for the first time, when above conditions are met simultaneously, executing Step S609, otherwise, executing Step S610.
Step S609: Judging whether the number of calls is less than 3, wherein the number of calls represents how many times of responses, 3 represents the number of the called users, if the number of calls is less than 3, executing Step S610, otherwise, jumping to Step S602.
Step S610: Calling the call release label to release the call corresponding to the current call ID, and executing Step S609.
Step S611: Adding the number of calls by 1, and then jumping to Step S605.
Step S612: In the waiting label, if an on-hook event is returned, it is indicated that the conversation between the caller and the called user ends, releasing the call and ending the flow, otherwise, executing Step S613.
Step S613: In the waiting label, if a call failure event is returned, executing Step S614, otherwise, jumping to Step S602.
Step S614: Setting the call ID corresponding to the call invalid.
Step S615: Adding the number of errors by 1.
Step S616: Judging whether the number of errors is 3, if so, executing Step S617, otherwise, jumping to Step S602.
Step S617: When the number of errors is 3, it is indicated that calls to the three users are all failed, at this time, releasing the three calls, and ending the flow.

Corresponding to the above method embodiment, the embodiment of the invention also provides an apparatus for implementing call transfer by VXML.

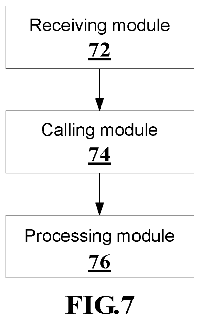

Fig. 7 shows a structure diagram of an apparatus for implementing call transfer by VXML according to the embodiments of the invention, as shown in Fig. 7, the apparatus comprises: a receiving module 72, a calling module 74 and a processing module 76, the structure will be described in details below.

The receiving module 72 is used for receiving calls from a caller to a plurality of called users; the calling module 74 is connected to the receiving module 72 and used for using an outbound label to call the plurality of called users one by one, wherein, calling the next called user immediately once a routing response from the called user for the current call is received; and the processing module 76 is connected to the calling module 74 and used for using a waiting label to process asynchronous events which occur during the calls to the plurality of called users.

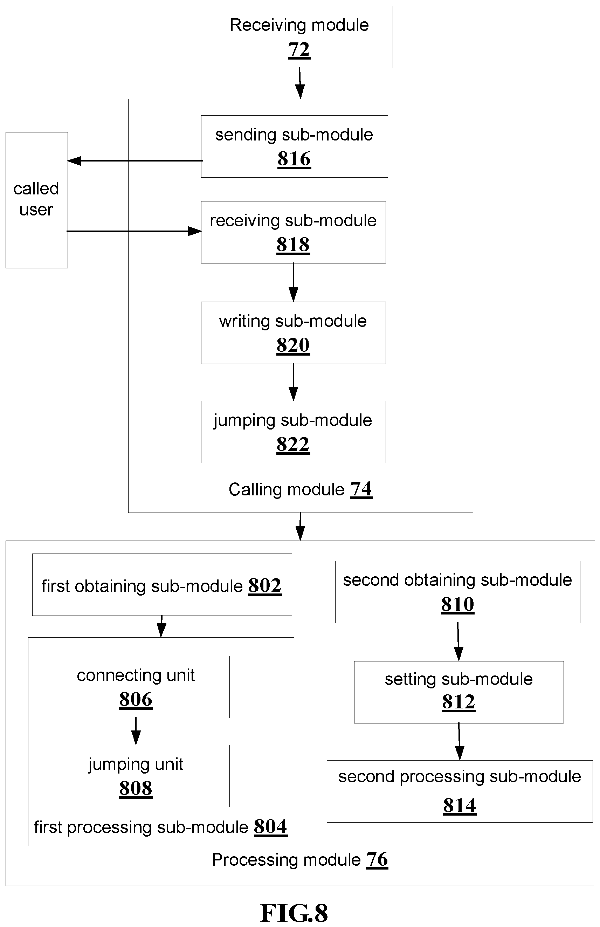

Fig. 8 shows the specific structure diagram of the apparatus for implementing call transfer by VXML according to the embodiments of the invention, the structure of the apparatus in the embodiment of the invention will be described in details below with reference to Fig. 8.

The processing module 76 comprises: a first obtaining sub-module 802, used for using the waiting label to obtain the response event of a called user, and the response event is responded for the first time; a first processing sub-module 804, connected to the first obtaining sub-module 802 and used for jumping to use a call connecting label to process.

Wherein, the first processing sub-module 804 comprises: a connecting unit 806, used for using the call connecting label to connect the caller with the called user corresponding to the response event; and a jumping unit 808, connected to the connecting unit 806 and used for jumping to use the processing module 76 to process the asynchronous event.

The processing module 76 further comprises: a second obtaining sub-module 810, used for using the waiting label to obtain the response event of a called user, the response event is not responded for the first time; a setting sub-module 812, connected to the second obtaining sub-module 810 and used for setting the ID of the call corresponding to the response event invalid; and a second processing sub-module 814, connected to the setting sub-module 812 and used for jumping to use a call release label to process.

The calling module 74 comprises: a sending sub-module 816, used for, for the called user corresponding to the current call, using the outbound label to imitate a request for establishing a search routing; a receiving sub-module 818, used for using the outbound label to receive the response to the request; a writing sub-module 820, connected to the receiving sub-module 818 and used for writing the channel number in the response into the call ID; and a jumping sub-module 822 connected to the writing sub-module 820 used for, for the next called user, jumping to the sending sub-module 816 to use the outbound label to initiate a request for establishing a search routing.

In conclusion, through the embodiment of the invention, the effect that telephones ring simultaneously is achieved by Voice XML. The method is simple to implement and high in maintainability; and call transfer can be achieved among different implementation platforms. In additional, as the method utilizes the existing intelligent network resources and internetworking ways, it is unnecessary to make significant changes for the communication equipment.

The case is an exemplary description for achieving the effect that telephones ring simultaneously, during practical application, the labels can be combined to obtain other flows as equivalently replacements of the ways in the embodiment of the invention. Additionally, the asynchronous calling label also can be called for many times during a conference, to call a plurality of users simultaneously during the conference.

Obviously, it should be understood by those skilled in the art that, the above various modules or steps of the present invention may be implemented by use of a universal computing device; they may be centralized at a single computing device or distributed at the network composed of multiple computing devices; alternatively, they may be implemented by an executable program code of computing device, therefore which may be stored in a storage device and executed by a computing device, or which may be respectively formed as various integrated circuit modules, or multiple modules or steps of which may be formed as single integrated circuit module. Therefore, the present invention is not limited to any specific combination of hardware and software.

The foregoing is only preferred embodiments of the present invention and is not for use in limiting the protection scope thereof, and for those skilled in the art, there may be various modifications and changes to the present invention. The present invention is defined and limited only by the scope of appended claims.

## Claims

1. A method for implementing call transfer by voice extensible markup language, VXML, **characterized by** comprising the following steps of:
receiving (S302) a call from a caller to a plurality of called users;
using (S304) an outbound tag to call the plurality of called users one by one, wherein, calling the next called user immediately once a routing response from the current called user is received; and
using (S306) a waiting tag to process asynchronous events which occur during the calls to the plurality of called users.

2. The method according to claim 1, **characterized in that** the step of using the waiting tag to process asynchronous events comprises:
using (S503) the waiting tag to obtain a response event of a called user, wherein the response event is responded for the first time;
jumping to use a call connecting tag to process.

3. The method according to claim 2, **characterized in that** the step of jumping to use the call connecting tag to process comprises:
using the call connecting tag to connect the caller with the called user corresponding to the response event; and
jumping to use the waiting tag to process the asynchronous event.

4. The method according to claim 1, **characterized in that** the step of using the waiting tag to process the asynchronous event comprises:
using (S503) the waiting tag to obtain a response event of a called user, wherein the response event is not responded for the first time;
setting (S507) the ID of the call corresponding to the response event invalid; and
jumping to use a call release tag to process.

5. The method according to claim 4, **characterized in that** the step of jumping to use the call release tag to process comprises:
using the call release tag to release the call with invalid ID, wherein the call release tag carries the reason for releasing the call; and
jumping to use the waiting tag to process the asynchronous event.

6. The method according to any one of claims 1-5, **characterized in that** the step of using the outbound tag to call the plurality of called users one by one, wherein, calling the next called user immediately once the routing response from the called user for the current call is received comprises:
for the called user corresponding to the current call, using (S402) the outbound tag to initiate a request for creating a search routing;
using (S404) the outbound tag to receive the response to the request;
writing (S406) a channel number carried in the response into the call ID; and
for the next called user, jumping (S408) to use the outbound tag to initiate a request for creating a search routing.

7. An apparatus for implementing call transfer by voice extensible markup language, VXML, **characterized by** comprising:
a receiving module (72), configured to receive a call from a caller to a plurality of called users;
a calling module (74), configured to use an outbound tag to call the plurality of called users one by one, wherein, the calling module calls the next called user immediately once a routing response from the current called user is received; and
a processing module (76), configured to use a waiting tag to process asynchronous events which occur during the calls to the plurality of called users.

8. The apparatus according to claim 7, **characterized in that** the processing module (76) further comprises:
a first obtaining sub-module (802), configured to use the waiting tag to obtain a response event of a called user, wherein the response event is responded for the first time;
a first processing sub-module (804), configured to jump to use a call connecting tag to process.

9. The apparatus according to claim 8, **characterized in that** the first processing sub-module (804) further comprises:
a connecting unit (806), configured to use the call connecting tag to connect the caller with the called user corresponding to the response event; and
a jumping unit (808), configured to jump to use the waiting tag to process the asynchronous event.

10. The apparatus according to claim 7, **characterized in that** the processing module (76) further comprises:
a second obtaining sub-module (810), configured to use the waiting tag to obtain a response event of a called user, wherein the response event is not responded for the first time;
a setting sub-module (812), configured to set the ID of the call corresponding to the response event invalid; and
a second processing sub-module (814), configured to jump to use a call release tag to process.

11. The apparatus according to any one of claims 7-10, **characterized in that** the calling module (74) further comprises:
a sending sub-module (816), configured to, for the called user corresponding to the current call, use the outbound tag to initiate a request for creating a search routing;
a receiving sub-module (818), configured to use the outbound tag to receive the response to the request;
a writing sub-module (820), configured to write a channel number carried in the response into the call ID; and
a jumping sub-module (822), configured to, for the next called user, jump to use the outbound tag to initiate a request for creating a search routing.

## Patentansprüche

1. Verfahren zum Implementieren einer Rufübertragung durch Voice Extensible Markup Language, VXML, **dadurch gekennzeichnet, dass** es die folgenden Schritte umfasst:
Empfangen (S302) eines von einem Anrufer an eine Vielzahl angerufener Nutzer gerichteten Anrufs;
Verwenden (S304) eines Outbound Tag zum Rufen der Vielzahl angerufener Nutzer einen nach dem anderen, wobei der nächste angerufene Nutzer unmittelbar dann angerufen wird, nachdem eine Routing Response von dem aktuellen angerufenen Nutzer empfangen wird; und
Verwenden (S306) eines Waiting Tag zum Verarbeiten asynchroner Ereignisse, die während der Anrufe an die Vielzahl angerufener Nutzer eintreten.

2. Verfahren gemäß Anspruch 1, **dadurch gekennzeichnet, dass** der Schritt zum Verwenden des Waiting Tag zum Verarbeiten asynchroner Ereignisse umfasst:
Verwenden (S503) des Waiting Tag zum Beschaffen eines Antwortereignisses eines angerufenen Nutzers, wobei zum ersten Mal auf das Antwortereignis geantwortet wird;
Springen zum Verwenden eines Call Connecting Tag zum Verarbeiten.

3. Verfahren gemäß Anspruch 2, **dadurch gekennzeichnet, dass** der Schritt des Springens zum Verwenden des Call Connecting Tag zum Verarbeiten umfasst:
Verwenden des Call Connecting Tag zum Verbinden des Anrufers mit dem angerufenen Nutzer, der dem Antwortereignis entspricht; und
Springen zum Verwenden des Waiting Tag zum Verarbeiten des asynchronen Ereignisses.

4. Verfahren gemäß Anspruch 1, **dadurch gekennzeichnet, dass** der Schritt des Verwendens des Waiting Tag zum Verarbeiten des asynchronen Ereignisses umfasst:
Verwenden (S503) des Waiting Tag zum Beschaffen eines Antwortereignisses eines angerufenen Nutzers, wobei nicht das erste Mal auf das Antwortereignis geantwortet wird;
Einstellen (S507) der ID des Anrufs, der dem Antwortereignis entspricht, als ungültig; und
Springen zum Verwenden eines Call Release Tag zum Verarbeiten.

5. Verfahren gemäß Anspruch 4, **dadurch gekennzeichnet, dass** der Schritt des Springens zum Verwenden des Call Release Tag zum Verarbeiten umfasst:
Verwenden des Call Release Tag zum Auslösen des Anrufs mit ungültiger ID, wobei der Call Release Tag den Grund zum Auslösen des Anrufs enthält; und
Springen zum Verwenden des Waiting Tag zum Verarbeiten des asynchronen Ereignisses.

6. Verfahren gemäß einem der Ansprüche 1 bis 5, **dadurch gekennzeichnet, dass** der Schritt zum Verwenden des Outbound Tag zum Anrufen der Vielzahl angerufener Nutzer einen nach dem anderen, wobei der nächste angerufene Nutzer unmittelbar dann angerufen wird, nachdem die Routing Response von dem angerufenen Nutzer für den aktuellen Anruf empfangen wird, umfasst:
für den dem aktuellen Anruf entsprechenden angerufenen Nutzer:
Verwenden (S402) des Outbound Tag zum Einleiten einer Anforderung zum Erzeugen eines Search Routing;
Verwenden (S404) des Outbound Tag zum Empfangen der Antwort auf die Anforderung;
Schreiben (S406) einer in der Antwort enthaltene Kanalnummer in die Anruf-ID; und
für den nächsten Anrufer: Springen (S408) zum Verwenden des Outbound Tag zum Einleiten einer Anforderung zum Erzeugen eines Search Routing.

7. Vorrichtung zum Implementieren einer Rufübertragung durch Voice Extensible Markup Language, VXML, **dadurch gekennzeichnet, dass** es umfasst:
ein Empfangsmodul (72), das dazu konfiguriert ist, einen von einem Anrufer an eine Vielzahl von Nutzern gerichteten Anruf zu empfangen;
ein Anrufmodul (74), das dazu konfiguriert ist, einen Outbound Tag dazu zu verwenden, die Vielzahl angerufener Nutzer einen nach dem anderen anzurufen, wobei das Anrufmodul den nächsten angerufenen Nutzer unmittelbar dann anruft, nachdem eine Routing Response von dem aktuellen angerufenen Nutzer empfangen wird; und
ein Verarbeitungsmodul (76), das dazu konfiguriert ist, einen Waiting Tag dazu zu verwenden, asynchrone Ereignisse zu verarbeiten, die während der Anrufe an die Vielzahl angerufener Nutzer eintreten.

8. Vorrichtung gemäß Anspruch 7, **dadurch gekennzeichnet, dass** das Verarbeitungsmodul (76) ferner umfasst:
ein erstes Beschaffungs-Untermodul (802), das dazu konfiguriert ist, den Waiting Tag dazu zu verwenden, ein Antwortereignis eines angerufenen Nutzers zu beschaffen, wobei das erste Mal auf das Antwortereignis geantwortet wird;
ein erstes Verarbeitungs-Untermodul (804), das dazu konfiguriert ist zu springen, um einen Call Connecting Tag zum Verarbeiten zu verwenden.

9. Vorrichtung gemäß Anspruch 8, **dadurch gekennzeichnet, dass** das erste Verarbeitungs-Untermodul (804) ferner umfasst:
eine Verbindungseinheit (806), die dazu konfiguriert ist, den Call Connecting Tag dazu zu verwenden, den Anrufer mit dem angerufenen Nutzer zu verbinden, der dem Antwortereignis entspricht; und
eine Springeinheit (808), die dazu konfiguriert ist zu springen, um den Waiting Tag dazu zu verwenden, das asynchrone Ereignis zu verarbeiten.

10. Vorrichtung gemäß Anspruch 7, **dadurch gekennzeichnet, dass** das Verarbeitungsmodul (76) ferner umfasst:
ein zweites Beschaffungs-Untermodul (810), das dazu konfiguriert ist, den Waiting Tag dazu zu verwenden, ein Antwortereignis eines angerufenen Nutzers zu beschaffen, wobei nicht das erste Mal auf das Antwortereignis geantwortet wird;
ein Einstell-Untermodul (812), das dazu konfiguriert ist, die ID des dem Antwortereignis entsprechenden Anrufs als ungültig einzustellen; und
ein zweites Verarbeitungs-Untermodul (814), das dazu konfiguriert ist zu springen, um einen Call Release Tag zum Verarbeiten zu verwenden.

11. Vorrichtung gemäß einem der Ansprüche 7 bis 10, **dadurch gekennzeichnet, dass** das Anrufmodul (74) ferner umfasst:
ein Sende-Untermodul (816), das dazu konfiguriert ist, für den dem aktuellen Anruf entsprechenden angerufenen Nutzer den Outbound Tag zu verwenden, um eine Anforderung zum Erzeugen eines Search Routing einzuleiten;
ein Empfangs-Untermodul (818), das dazu konfiguriert ist, den Outbound Tag dazu zu verwenden, die Antwort auf die Anforderung zu empfangen;
ein Schreib-Untermodul (820), das dazu konfiguriert ist, eine in der Antwort enthaltene Kanalnummer in die Anruf-ID zu schreiben; und
ein Spring-Untermodul (822), das dazu konfiguriert ist, für den nächsten angerufenen Nutzer zu springen, um den Outbound Tag dazu zu verwenden, eine Anforderung zum Erzeugen eines Search Routing einzuleiten.

## Revendications

1. Procédé de mise en oeuvre d'un transfert d'appel par un langage de balisage extensible vocal, VXML, **caractérisé en ce qu'**il comprend les étapes suivantes :
la réception (S302) d'un appel d'un appelant à une pluralité d'utilisateurs appelés ;
l'utilisation (S304) d'une balise sortante pour appeler un par un la pluralité d'utilisateurs appelés, dans lequel, l'utilisateur appelé suivant est appelé immédiatement dès qu'une réponse d'acheminement provenant de l'utilisateur appelé courant est reçue ; et
l'utilisation (S306) d'une balise d'attente pour traiter des événements asynchrones qui surviennent durant les appels à la pluralité d'utilisateurs appelés.

2. Procédé selon la revendication 1, **caractérisé en ce que** l'étape d'utilisation de la balise d'attente pour traiter des événements asynchrones comprend :
l'utilisation (S503) de la balise d'attente pour obtenir un événement de réponse d'un utilisateur appelé, dans lequel il est répondu pour la première fois à l'événement de réponse ;
le saut pour utiliser une balise de connexion d'appel aux fins de traitement.

3. Procédé selon la revendication 2, **caractérisé en ce que** l'étape de saut pour utiliser la balise de connexion d'appel aux fins de traitement comprend :
l'utilisation de la balise de connexion d'appel pour connecter l'appelant à l'utilisateur appelé correspondant à l'événement de réponse ; et
le saut pour utiliser la balise d'attente pour traiter l'événement asynchrone.

4. Procédé selon la revendication 1, **caractérisé en ce que** l'étape d'utilisation de la balise d'attente pour traiter l'événement asynchrone comprend :
l'utilisation (S503) de la balise d'attente pour obtenir un événement de réponse d'un utilisateur appelé, dans lequel il n'est pas répondu pour la première fois à l'événement de réponse ;
le réglage (S507) de l'identifiant de l'appel, correspondant à l'événement de réponse invalide ; et
le saut pour utiliser une balise de relâchement d'appel aux fins de traitement.

5. Procédé selon la revendication 4, **caractérisé en ce que** l'étape de saut pour utiliser la balise de relâchement d'appel aux fins de traitement comprend :
l'utilisation de la balise de relâchement d'appel pour relâcher l'appel avec un identifiant invalide, dans lequel la balise de relâchement d'appel transporte la raison du relâchement de l'appel ; et
le saut pour utiliser la balise d'attente pour traiter l'événement asynchrone.

6. Procédé selon l'une quelconque des revendications 1 à 5, **caractérisé en ce que** l'étape d'utilisation de la balise sortante pour appeler un par un la pluralité d'utilisateurs appelés, dans lequel, l'appel de l'utilisateur appelé suivant immédiatement dès que la réponse d'acheminement en provenance de l'utilisateur appelé pour l'appel courant est reçue comprend :
pour l'utilisateur appelé correspondant à l'appel courant, l'utilisation (S402) de la balise sortante pour lancer une demande pour créer un acheminement de recherche ;
l'utilisation (S404) de la balise sortante pour recevoir la réponse à la demande ;
l'écriture (S406) d'un numéro de canal, transporté dans la réponse, dans l'identifiant de l'appel ; et
pour l'utilisateur appelé suivant, le saut (S408) pour utiliser la balise sortante pour lancer une demande pour créer un acheminement de recherche.

7. Appareil de mise en oeuvre d'un transfert d'appel par un langage de balise extensible vocal, VXML, **caractérisé en ce qu'**il comprend :
un module de réception (72), configuré pour recevoir un appel d'un appelant à une pluralité d'utilisateurs appelés ;
un module d'appel (74), configuré pour utiliser une balise sortante pour appeler un par un la pluralité d'utilisateurs appelés, dans lequel, le module d'appel appelle l'utilisateur appelé suivant immédiatement dès qu'une réponse d'acheminement provenant de l'utilisateur appelé courant est reçue ; et
un module de traitement (76), configuré pour utiliser une balise d'attente pour traiter des événements asynchrones qui surviennent durant les appels à la pluralité d'utilisateurs appelés.

8. Appareil selon la revendication 7, **caractérisé en ce que** le module de traitement (76) comprend en outre :
un premier sous-module d'obtention (802), configuré pour utiliser la balise d'attente pour obtenir un événement de réponse d'un utilisateur appelé, dans lequel il est répondu pour la première fois à l'événement de réponse ;
un premier sous-module de traitement (804), configuré pour effectuer un saut pour utiliser une balise de connexion d'appel aux fins de traitement.

9. Appareil selon la revendication 8, **caractérisé en ce que** le premier sous-module de traitement (804) comprend en outre :
une unité de connexion (806), configurée pour utiliser la balise de connexion d'appel pour connecter l'appelant avec l'utilisateur appelé correspondant à l'événement de réponse ; et
une unité de saut (808), configurée pour effectuer un saut pour utiliser la balise d'attente pour traiter l'événement asynchrone.

10. Appareil selon la revendication 7, **caractérisé en ce que** le module de traitement (76) comprend en outre :
un second sous-module d'obtention (810), configuré pour utiliser la balise d'attente pour obtenir un événement de réponse d'un utilisateur appelé, dans lequel il n'est pas répondu pour la première fois à l'événement de réponse ;
un sous-module de réglage (812), configuré pour régler l'identifiant de l'appel correspondant à l'événement de réponse invalide ; et
un second sous-module de traitement (814), configuré pour effectuer un saut pour utiliser une balise de relâchement d'appel aux fins de traitement.

11. Appareil selon l'une quelconque des revendications 7 à 10, **caractérisé en ce que** le module d'appel (74) comprend en outre :
un sous-module d'envoi (816), configuré, pour l'utilisateur appelé correspondant à l'appel courant, pour utiliser la balise sortante pour lancer une demande pour créer un acheminement de recherche ;
un sous-module de réception (818), configuré pour utiliser la balise sortante pour recevoir la réponse à la demande ;
un sous-module d'écriture (820), configuré pour écrire un numéro de canal, transporté dans la réponse, dans l'identifiant d'appel ; et
un sous-module de saut (822), configuré, pour l'utilisateur appelé suivant, pour effectuer un saut pour utiliser la balise sortante pour lancer la demande pour créer un acheminement de recherche.
